# EUROPEAN PATENT SPECIFICATION

(11) **EP 1 046 772 B1**
(45) Date of publication and mention of the grant of the patent: **13.07.2005**
(21) Application number: 00108659.4
(22) Date of filing: 20.04.2000
(51) Int. Cl.: E05B 65/20, B60J 5/04

(54) **Vehicle door system having a door lock device and door outside handle**
Türsystem für Kraftfahrzeuge mit Türschliessvorrichtung und Türaussengriff
Système de porte pour véhicule avec dispositif de serrure de porte et poignée extérieure

(30) Priority: 22.04.1999 JP 11522199
(43) Date of publication of application: 25.10.2000
(73) Proprietor: AISIN SEIKI KABUSHIKI KAISHA, Kariya City Aichi Pref. (JP)
(72) Inventor: Fukumoto, Ryoichi, Nagoya-shi, Aichi-ken (JP); Tanimoto, Tetsuro, Anjo-shi, Aichi-ken (JP); Uchitsunemi, Masayuki, Chiryu-shi, Aichi-ken (JP)
(74) Representative: Leson, Thomas Johannes Alois, Dipl.-Ing.

(56) References cited:
- DE-A- 19 728 967
- DE-C- 3 443 313
- DE-C- 4 301 053
- JP-U- 4 016 276
- US-A- 4 913 477
- PATENT ABSTRACTS OF JAPAN vol. 1999, no. 08, 30 June 1999 (1999-06-30) -& JP 11 078526 A (HINO MOTORS LTD), 23 March 1999 (1999-03-23)
- PATENT ABSTRACTS OF JAPAN vol. 017, no. 639 (M-1515), 26 November 1993 (1993-11-26) -& JP 05 201252 A (NISSAN MOTOR CO LTD), 10 August 1993 (1993-08-10)

## Description

This invention relates to a vehicle door system having a door lock device and a door outside handle according to the preamble of claim 1, and more particularly to a door system for a vehicle in which a door lock device and door outside handle are operatively and mutually connected by a connecting element.

Conventionally, a door system for a vehicle of this type is disiclosed in a JP-U-4-16276.

In this prior art, the door system having a door inner panel and a door outer panel connected one another to form a door inner space therein a door lock device having an open element attached on the surface of the door inner panel at the inner side of the vehicle compartment, and a door outside handle operatively connected to the open element of the door lock device by a connecting element and attached on the surface of the door outer panel at the outer side of the vehicle compartment.

This door system further discloses a through hole formed in the door inner panel and the connecting element being inserted into the through hole via sealing element. One end of the connecting element is connected to the open element of the door lock device and the other end thereof is connected to the door outside handle to enable the operative connection between the door lock device and the door outside handle.

In this type of the conventional door system, the through hole is formed in the door inner panel for inserting the connecting element to accomplish the operative connection between the door lock device. And the door outside handle. In order to seal or cover the communication space through the through hole between the door inner space and the inner side (vehicle compartment side) of the door inner panel, a sealing member is provided. Further, the door inner space is exposed to the outside of the vehicle door at the upper edge thereof (at the belt line portion of the vehicle door upper side) for raising or lowering a window glass from or to a gap between the door inner panel and the door outer panel. This opening of the door inner space may cause the water or the rain drops to enter into the door inner space. Such external substances entering from the space may directly contact with the seal member, which eventually lead to the corrosions thereof and finally may lead to the insufficient water proof function to prevent the external substances from entering into the compartment side of the door inner panel.

A generic vehicle door system having a door lock device and door outside handle is known from DE-A-197 28 967. A door outer panel is operatively connected to a door inner panel to form a door inner space therebetween. The door lock device is secured to the inner side of the vehicle compartment side of the door inner panel and is operated to open and close the door of the vehicle, the door lock device having an open element. The door outside handle is attached to the door outer panel and operatively connected to the open element of the door lock device through a connecting element. A through hole is formed in the door inner panel. The open element is inserted therein. A hood element is provided in the door inner space for covering the through hole.

Further vehicle door systems are shown in DE-C-34 43 313 and DE-C-43 01 053.

It is therefore an object of the present invention to further develop an vehicle door system according to the preamble of claim 1 to have an improved water proof function with a water prevention structure.

This object is achieved by a vehicle door system having the features of claim 1.

Advantageous further developments are set out in the dependent claims.

According to the present invention, the improved vehicle door system prevents water from entering the inside of the vehicle compartment from the door inner panel.

According to the present invention, the improved vehicle door improves the vehicle theft prevention function.

According to the technical solution above, the water proof function may be drastically improved by protecting the through hole from direct exposure to the water or water drops entering into the door inner space by covering the through hole using the hood element.

More preferably, the open element of the door lock device has a reverse U-shaped open lever at the convex portion of which the through hole is inserted, one end of which is extended into the door inner space along the hood element and connected to the connecting element and the other end of which is extended along the inner surface of the vehicle compartment side of the door inner panel, a main lever rotatably connected to the other end of the open lover for actuating the door lock device and a sub lever one end of which is rotatably connected between the convex portion and the other end of the open lever and the other end of which is rotatably connected to a base plate of the door lock device, whereby the linear movement of the connecting element upon opening operation of the door outside handle may be converted into the rotational movement and such rotational movement is transmitted to the door lock device.

According to the present invention, a water proof material may be preferably provided on the outer peripheral portion of the through hole to more strengthen the water proof funcyion.

According to another preferred further development, the hood element may be constructed by a lock reinforce to reinforce the portion of the door inner panel corresponding to the attachment portion of the door lock device.

According to the vehicle door system of the above structure of the invention, since the door lock device is disposed on the inner side of the compartment side of the door inner panel, the vehicle theft prevention function will be improved.

The object and features of the invention will be more apparant and more readily appreciated from the following detailed description of the preferred embodiments of the invention with the accompanying drawings , in which;
Fig.1 is an exploded perspective view of a vehicle door according to the one embodiment of the present invention;
Fig.2 is an exploded perspective view of the inner module of the vehicle door of the embodiment of the invention;
Fig.3 is a front view of the inner module of the vehicle door according to Fig.2;
Fig.4 is an exploded perspective view of the door lock device upon attachment to the vehicle door according to the present embodiment of the invention;
Fig.5 is a front view of the door lock device attached to the vehicle door of the present embodiment of the invention;
Fig.6 is a cross-sectional view taken along the line B-B of Fig.5;
Fig.7 is a cross-sectional view taken along the line C-C of Fig.5;
Fig.8 is a cross-sectional view taken along the line D-D of Fig.5;

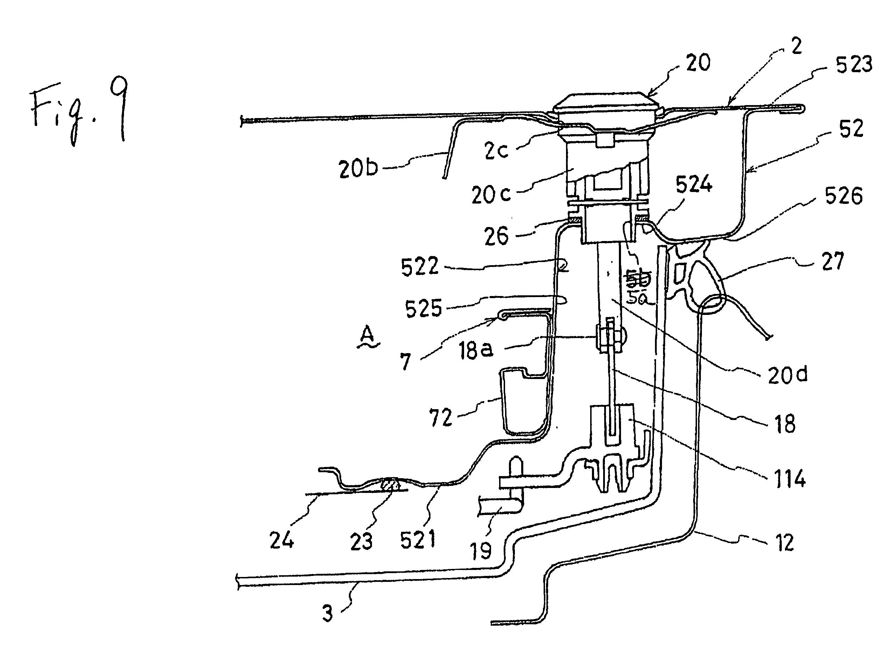

Fig.9 is a cross-sectional view taken along the line E-E of Fig.5; and
Fig.10 is a perspective view of the weather strip attached to the vehicle door of the present embodiment of the invention.

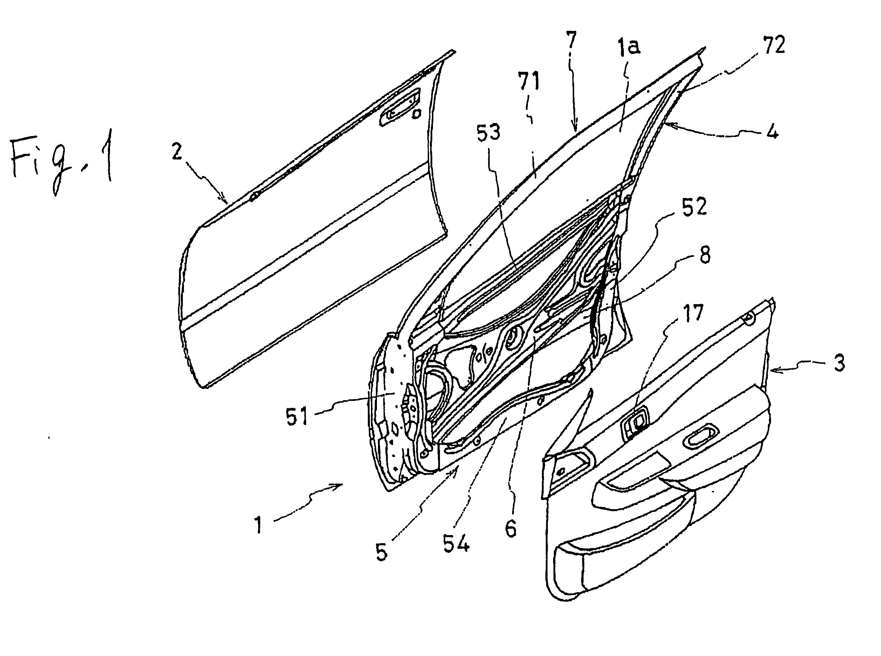

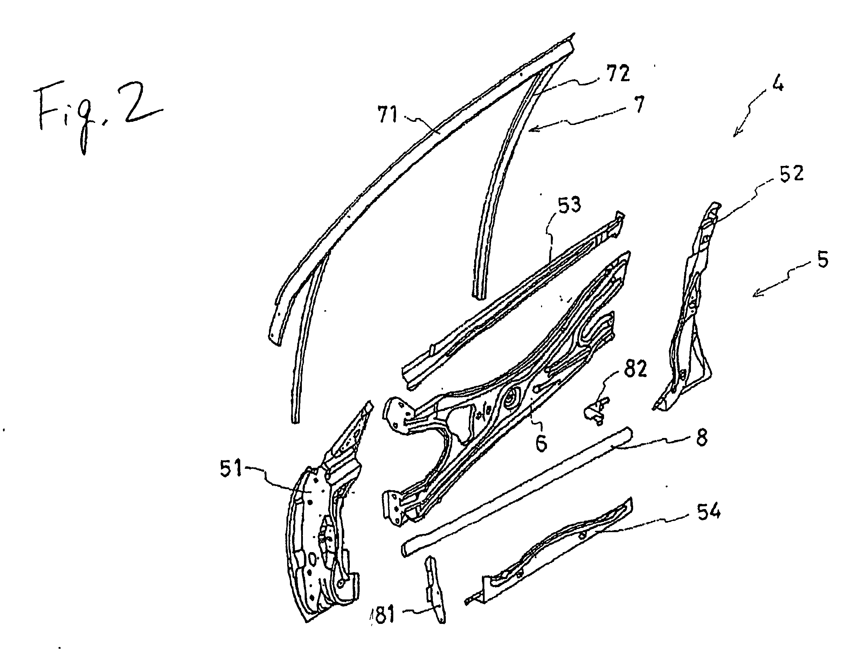

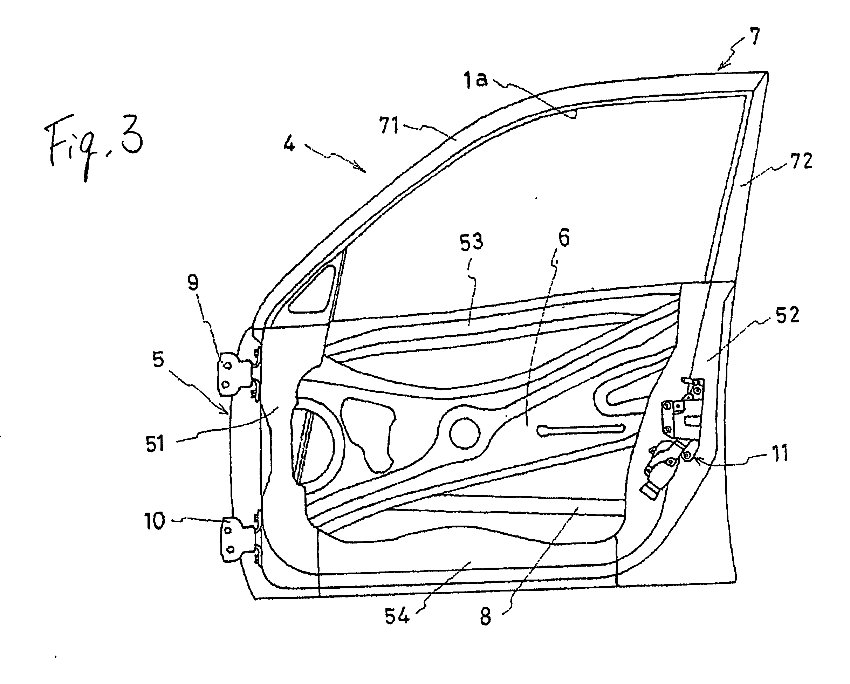

Referring now to the attached drawings, first in Fig.1, the door 1 of the vehicle is comprised of a door outer panel 2 which serves as the vehicle door outside appearance, a door trim 3 which serves as the vehicle door inside appearance and inner door module 4 which serves as a door frame of the door 1. The inner door module 4 is disposed between the door outer panel 2 and the door trim 3 and supports the door trim 3 on the inner compartment surface side of the inner door module and further supports the door outer panel 2 on the outer compartment surface side of the inner module 4.

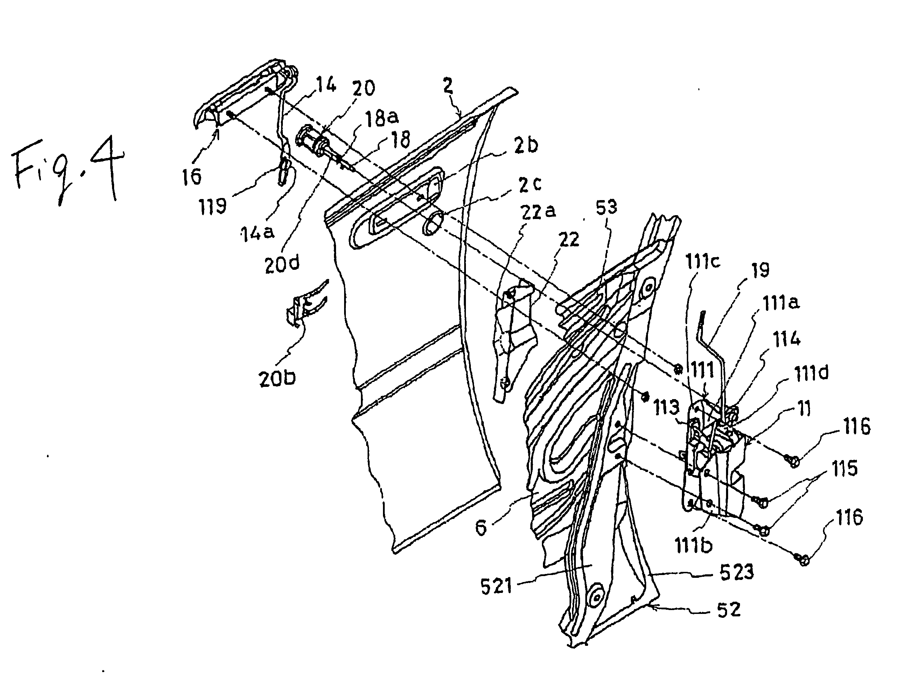

As shown in Fig.2, the inner module 4 includes a door inner panel 5, a base panel 6, a door frame 7 and a door impact beam 8.

The door inner panel 5 includes a hinge side panel 51, a lock side panel 52, an upper reinforce 53 and a lower panel 54. The hinge side panel 51 is provided along the forward end (left side as shown in Fig.1) of the door outer panel 2 and serves as a front end wall of the vehicle door 1. The lock side panel 52 is provided along the rear end (right side as shown in Fig.1) of the door outer panel 2 and serves as a rear end wall of the vehicle door 1.

The upper reinforce 53 is provided along the upper end (belt molding line) of the door outer panel 2 and is welded to the hinge side panel 51 at the front end thereof and also welded to the lock side panel 52 at the rear end thereof. The lower panel 54 is provided along the lower end of the door outer panel 2 and is welded to the hinge side panel 51 at the front end thereof and also welded to the lock side panel 52 at the rear end thereof. Thus, the door inner panel 5 is shaped of a rectangular frame to form a framework for the vehicle door. The front and rear edges and the lower edge of the door outer panel 2 are secured to the door inner panel 5 by the hemming roll forming to form a door inner space A which is open at the upper belt line with the cooperation of the door outer panel 2.

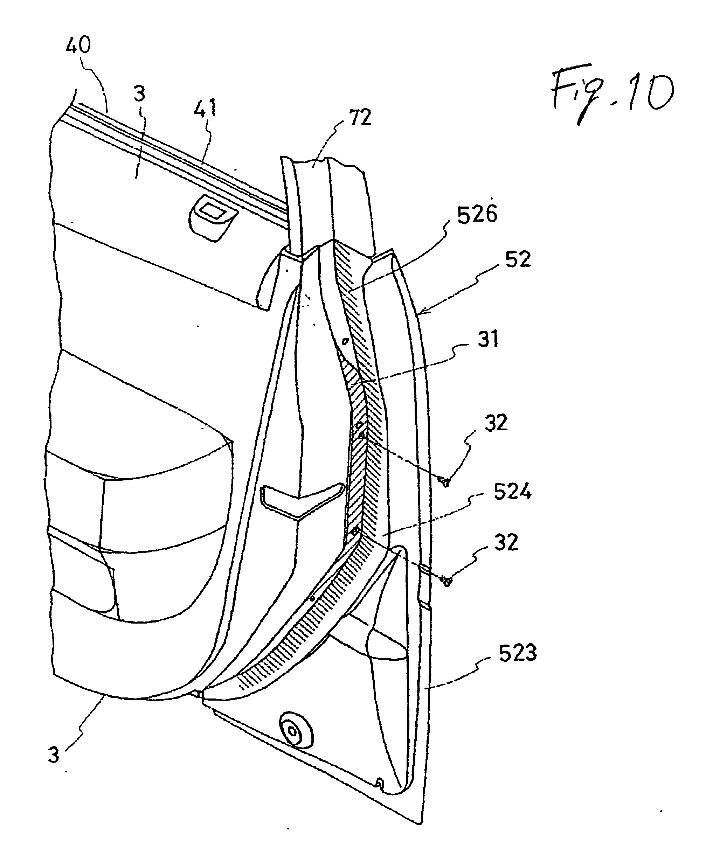

The door inner space A open at the belt line portion is the space for accommodating a door window glass held by the belt molding 41 in the both side directions. The window glass is raised and lowered within a window portion 1a formed by the door frame 7. (see Fig.10)
A pair of upper and lower hinge elements 9,10 (see Fig. 3) which swingably the front end of the door 1 with respect to the vehicle body are attached to the hinge side panel 51 and the door lock device 11 is attached to the lock side panel 52 positioned at the rear portion of the door 1 and is detachably supporting the rear edge of the vehicle door 1 with respect to the vehicle body 12.

Thus constructed, the vehicle door 1 is swingably (open or close) supported by the vehicle body 12.

The base panel 6 is welded to the hinge side and lock side panels 51 and 52 to form an X shape. The base panel 6 is provided in parallel with the door outer panel 2 to secure the rigidity against the twisting force of the vehicle door 1.

The door frame 7 forms the window portion 1a in the vehicle door 1 and includes a front roof pillar element 71 which has a closed cross section shape and a center pillar element 72 which has a closed cross section shape welded together to form a framework of the door 1. The edge portion of the front roof pillar element 71 is welded to the hinge side panel 51, whereas the edge portion of the center pillar element 72 is welded to the lock side panel 52.

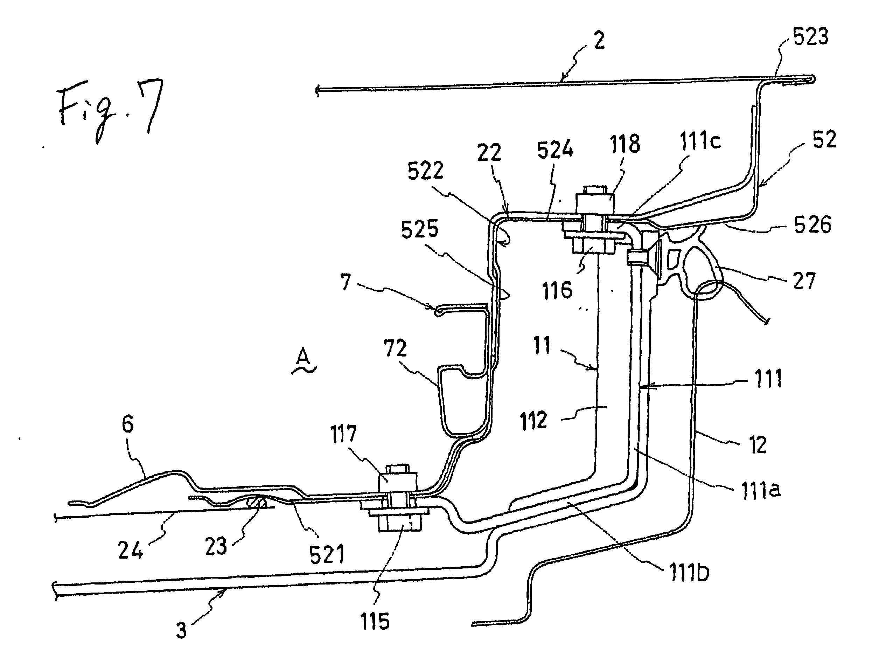

The door impact beam 8 is of elongated pipe shape and is disposed within the door inner space A at the outer side of the compartment side of the base plate 6 and in parallel with the upper reinforce 53 and the lower panel 54. At both ends of the beam 8 are connected to the hinge side panel 51 and the lock side panel 52 through brackets 81 and 82, respectively. It is noted that the base panel 6 and the door impact beam 8 are covered by a cover member 8 attached to the inner side surface of the compartment side of the door inner panel 5 by a seal member 23. (see fig.7)

Next, explaining the structure of the door lock device 11, the lock side panel 52 of the door inner panel 5 is of a reverse L-shape having a horizontal wall 521 and a vertical wall 522 as is shown in Fig. 7. The horizontal wall 521 is disposed at the inner side of the compartment side of the door outer panel 2 having a predetermined distance with the door outer panel 2 so that the horizontal wall 521 and the door outer panel 2 are in parallel relation with each other.
The rear edge of the vertical wall 522 is bent and riveted at a flange wall 523 extending from the vertical wall 522 in opposite direction to the horizontal wall 521. A recess 525 forming a horizontal wall 524 approximately in parallel with the horizontal wall 521 is formed at the approximately central portion of the inner side surface of the compartment side of the vertical wall 522 in vehicle width direction (top and bottom as viewed in Fig.7)

On the other hand, the door lock device 11 is attached to a base plate 111 cross section of which is of approximately reverse-C shape and having a pair of flange walls 111b and 111c extending in both ends of the vertical wall 111a. The door lock device 11 includes a latch structure 112 at the inside thereof. The latch structure 112 is the type which engages with and disengages from a striker (not shown) secured to the vehicle door.
The door lock device 11 is supported on the base plate 111 and an open lever 113 is rotatable with respect to the door lock device 11 and upon rotation of a main lever 113a which is supported by the base plate 111, the door latch structure 112 of the door lock device is disengaged from the striker of the vehicle body 12 and the vehicle door 1 can be opened with respect to the vehicle body 12. A key lever 114 of the door lock device 11 rotatably supported on the base plate 111 disengages the connection between the open lever 113 and the latch structure 112 via a locking lever (not shown ) and the vehicle door 1 becomes under locked condition.

The door lock device 11 is accommodated in the recess 525 of the lock side panel 52 at the inner side of the compartment side of the door so that the vertical wall 111a of the base plate 111 may be in parallel with the vertical wall 522 of the lock side panel 52 (Fig.7). The pair of flange walls 111b, 111c of the base plate 111 are secured to the horizontal walls 521, 524 of the lock side panel 52 from the inside of the compartment by fastening bolts 115, 116 and nuts 117, 118 thereby to attach the door lock device 11 on the inner surface of the compartment side of the door inner panel 5.

Since the door look device 11 is secured to the horizontal walls 521, 524 of the lock side panel 52 from the inside of the compartment of the vehicle, the attachment of the door lock device into the vehicle door 1 becomes very easy and it is expected to improve the efficiency of the assembly work of the vehicle door . Further, the bolts 115, 116 securing the door lock device 11 can receive the tensile load in cooperation with the door lock device itself when the load is applied to the door in door opening direction. This is because the vehicle door 1 is in engagement with the vehicle body 12 through the door lock device 11.

It is further noted that the portions of the fastening by the bolt 115 and nut 117 of the lock side panel 52 are reinforced by the base panel 6 which is welded to the center pillar portion 72 of the door frame 7 from the outer side of the compartment side (door inner space A side). Further, the portions of the fastening by the bolt 116 and nut 118 of the lock side panel 52 are reinforced by the lock reinforce 22 which is welded to the center pillar portion 72 of the door frame 7 from the outer side of the compartment side (door inner space A). This will improve the strength of the attachment of the door lock device 11 to the vehicle door. This lock reinforce 22 serves as a water proof function to prevent the water from entering into the door inner side of the vehicle compartment side of the door inner panel 5. The water proof function can be performed with a light-weight structure. This will be described in detail hereafter.

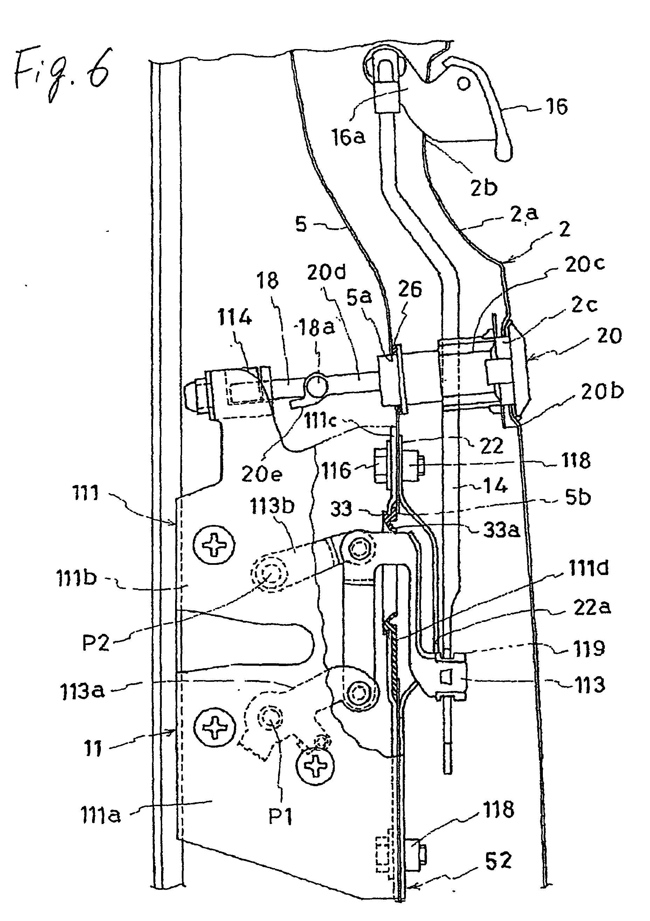

As shown in Fig. 6, the main lever 113a of the door lock device 11 is operatively connected to the door outside handle 16 which rotatably supported on the door outer panel 2 through an open lever 113(detail of which will be described later) and a connecting rod 14 and the key lever 114 is operatively connected to a door key cylinder 20 which is attached to the door outer panel 2 through another connecting rod 18.

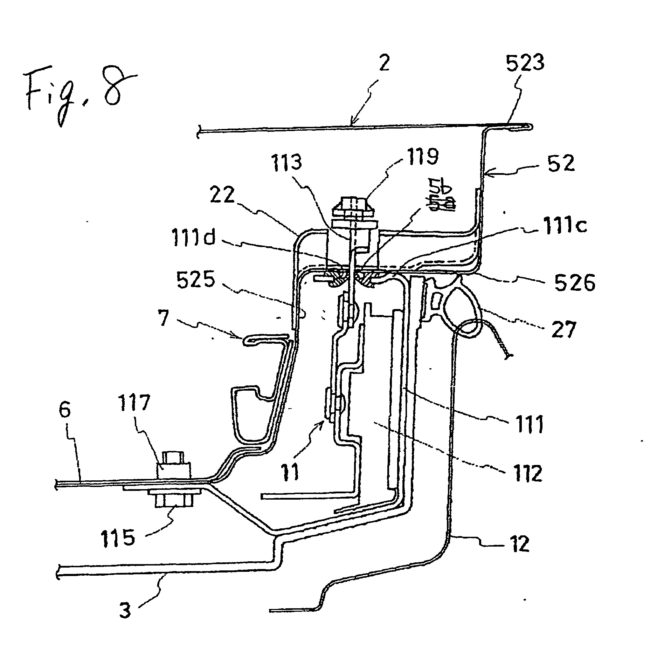

As shown in Figs. 6 and 8, the door outer side handle 16 is disposed in a recess 2a formed on the outer side surface of the compartment side of the door outer panel 2 and is rotatably supported on the door outer panel 2. An connecting arm portion 16a of the door outside handle 16 is inserted through an opening 2b formed at the door outer panel 2 and positioned in the door inner space A between the door outer panel 2 and the door inner panel 5.

As shown in Figs. 6, The through holes 5a, 5b are formed in the lock side panel 52 of the door inner panel 5. The through hole 5a is positioned upward the through hole 5b

The open lever 113 is of approximately reverse U-shaped as shown in Fig.6 and is inserted into the through hole 5b of the door inner panel 5 and an elongated hole 111d provided on a flange wall 111c at corresponding portion to the through hole 5b of the door inner panel 5 in vertical direction. One lower end portion of the reverse U at the compartment side is extending along the lock side panel 52 of the door inner panel 113a and rotatably supported on the main lever 113a of the door lock device 11 and at the same time an upper end portion of the reverse U shape of the open lever 113 at the compartment side is connected to the sub lever 113b which is rotatably supported on the door lock device 11 for opening operation thereof. Under such constructions, the open lever 113 is rotatable at a fulcrum P1 of the main lever 113a and a fulcrum P2 of the sub lever 113b, which enables the upward and downward movements of the lever 113 with respect to the vehicle door 1 (upward and downward as shown in Fig.6).

The elongated hole 111d of the base plate 111 is slightly larger than the operational range of the open lever 113 and the entire periphery of the elongated hole is provided with a grommet having a lip portion 33a extending toward the outside of the vehicle compartment to prevent the water or the exterior materials from entering the door lock device 11 which is located on the inside of the vehicle compartment side of the door inner panel 5. The lip portion 33a of the grommet is always in contact with the upper portion of the open lever 113 when the door outside handle 16 is in rest position ( the condition shown in Fig. 6) and prevents the water from entering into the door lock device side (inner side of the compartment from the door inner panel 5 ). The other lower end of the open lever 113 extending outside of the compartment side is inserted into a through hole 22a provided at approximately central portion of the lock reinforce 22 and extending along the lock reinforce 22 outwardly of the compartment and is located in the door inner space A between the door outer panel 2 and door inner panel 5. Further, a connecting grip 119 is fitted into the other lower end of the open lever 113 at the outer side of the compartment side. Thus the lock reinforce 22 covers the entire portion of the through hole 5b of the door inner panel 5 and the projecting portion of the open lever 113 and is projecting outside of the vehicle compartment. The through hole 5b of the door inner panel 5 is positioned higher than the through hole 22a of the lock reinforce 22 with respect to the vehicle door 1 (upper portion as viewed in Fig.6).

It should be noted that the through hole 22a provided in the lock reinforce 22 may be provided in another element provided separately from the lock reinforce 22 but secured thereto. This separately provided element may cover the through hole 5b of the door inner panel 5 and the projecting portion of the open lever 113 extending outwardly of the vehicle compartment side from the through hole 5b.

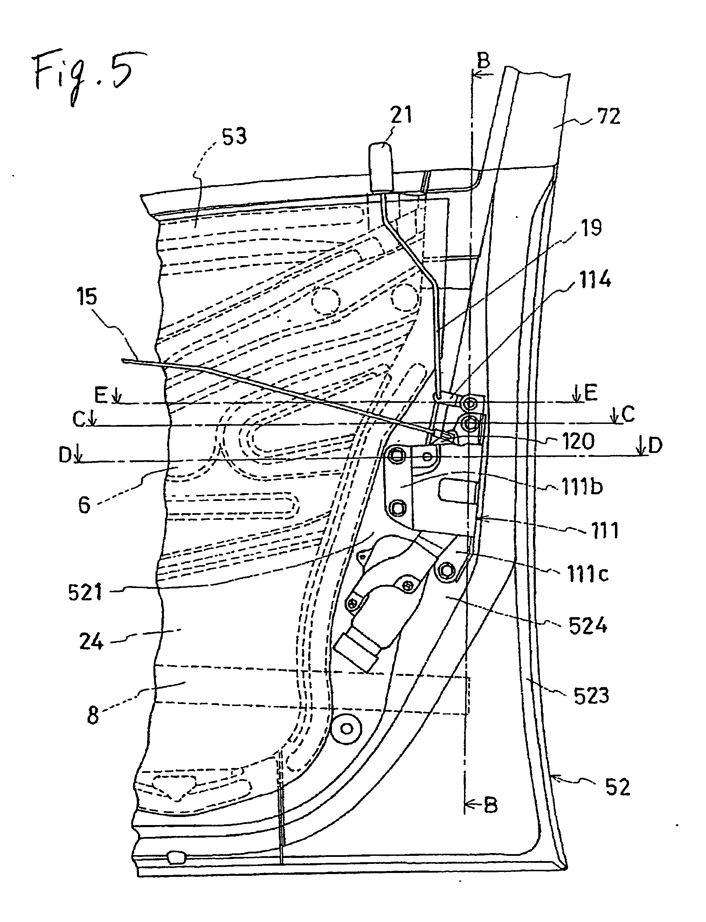

The connecting rod 14 is disposed in the door inner space A between the door outer panel 2 and door inner panel 5 and one end thereof is clipped at the arm portion 16a of the outside door handle 16 and the other end of the connecting rod 14 is clipped by a connecting clip 119 to the open lever 113 through the elongated hole 14a provided at the lower end of the connecting rod 14.(see Figs. 4 and 6)

Upon rotation of the door outside handle 16 in the counter clockwise direction as viewed in Fig. 6, the connecting rod 14 is moved downward to thereby move the open lever 113 downward. These downward movements of the connecting rod 14 and the open lever 113 cause the rotation of the open lever 113a of the door lock device 11 to open the vehicle door 1.

According to this structure, by a simple construction, the linear movement of the connecting rod 14 can be converted to the rotational movement of the open lever of the door lock device.

The key cylinder 20 is inserted into the through hole 2c provided on the door outer panel 2 and further inserted into the through hole 5a of the door inner panel 5 crossing through the door inner space A. The key cylinder 20 is supported on a cylinder case 20c by a supporting clip 20b secured to the door outer panel 2. The key cylinder 20 is thus supported at both ends by the door outer panel 2 and the door inner panel 5 to assure the stability of the attachment of the key cylinder 20 to the vehicle door assembly.

A connecting rod 18 extending from the key cylinder 20 is disposed inside of the compartment side of the door inner panel 5 and is rotatably connected to a key rotary rod 20d by a pin 18a at one end in the inner side of the compartment side of the door inner panel 5. The other end of the connecting rod 18 is secured to the key lever 114.

The key rotary rod 20d is rotatably connected to the connecting rod 18 and rotational movement of both rods 20d and 18 may absorb the eccentricity of the relative movement thereof. A pawl 20e is provided on the key rotary rod 20d to restrict an excess rotation of the both rods 20d and 18.

The key lever 114 is rotatably supported on a bracket secured to the vertical wall 111a of the base plate 111 and coaxial with the key rotary rod 20d. The key lever 114 is connected to a locking lever through a locking rod 19. Upon rotation of the door key cylinder 20, the connecting rod 18 is rotated in unitary and the key lever 114 of the door lock device 11 is rotated to lock the door 1 with respect to the vehicle body.

The through hole 5a of the door inner panel 5 into which the door key cylinder 20 is inserted is overlapped with the flange portion provided at the midway of the key cylinder 20 to serve as a sealing function between the door inner space A and inside of the compartment side of the door inner panel 5.

Now referring to the assembly process of the structure of the invention, first step is, as shown in Fig. 2, forming a door module 4 and at the same time welding the reinforce 22 thereto to secure the two.

After the welding, attaching the door outside handle 16 which has been connected to the connecting rod 14 and the door key cylinder 20 which has been connected to the connecting rod 18 to the outer door panel 2 from the outside of the compartment side, inserting the grommet 33 into the through hole 111d of the base plate 111, attaching the door lock device 11 to the door inner panel 5 from the inside of the compartment side. Upon the attachment of the door lock device 11 to door inner panel 5, fittingly inserting the connecting clip 119 of the connecting rod 14 into the open lever 113 of the door lock device 11, operatively connecting the door outside handle 16 with the open lever 113 via connecting rod 14, fittingly inserting the connecting rod 18 to the key lever 114 of the door lock device 11, and operatively connecting the door key cylinder 20 with the key lever 114 via the connecting rod 18.

Thus, the engagement between the door outside handle 16 and the door key cylinder 20 of the door look device 11 is carried out by the fitting insertion and attaching process of the door lock device to the vehicle door is simple and fast compared with that of the conventional process.

The open lever 113 of the door lock device 11 is connected to the inside lever 120 which is rotatably supported by the flange wall 111b of the base plate 111. The inside lever 120 is connected to the door inside handle 17 provided on the door trim 3 through the connecting rod 15 disposed inner side of the compartment side of the door inner panel 5. (see Fig.1)
The open lever 113 is rotatable upon the operation of the door inside handle 17.

The key lever 114 is connected to a lock knob 21 provided on the door trim 3 through a connecting rod 19 provided inside of the compartment side of the door inner panel 5 and the key lever 114 can be rotated upon the operation of the lock knob 21.

Further, the door lock device 11 is covered by the door trim 3 supported on the inner surface of the compartment side of the inner module 4 and is disposed between the door trim 3 and door inner panel 5. The door lock device 11 is thus concealed inside of the door 1 not to be seen from the inside of the compartment of the vehicle. The connecting rods 18 and 19 both connected to the key lever 114 of the door lock device 11 for opening and closing the door are disposed between the door trim and the door inner panel 5. Accordingly, the door inner space A in which the door window glass is to be accommodated has no components disposed which function as the locking and opening operation of the door 1. Under this structure, even a possible theft tries to open the door by inserting any tools into the space A along the window glass from the outside of the vehicle door, he or she cannot unlock the door lock device.

This structure of the invention also serves as a vehicle theft prevention.

The door trim 3 is screwed to the door inner panel 5 at the peripheral portion. The end portion of the door trim 3 corresponding to the lock side panel 52 side of the door inner panel 5 is disposed along the vertical wall 522, however, the portion 525 of the vertical wall 522, where the door lock device 11 is located, is recessed and accordingly the door lock device 11 is disposed along the base plate 111 and further a flange 31 is provided on the door trim 3 and the door trim 3 is attached to the vertical wall 111a of the base plate 111 at the flange portion 31 thereof by screws 32. Thus, the door trim 3 is screwed to the base plate 111 of the door lock device 11, which may prevent any possible deformation and interference with the vehicle body can be prevented.

A weather strip 27 is attached between the vehicle door 1 and vehicle body 12 along the front, lower, and upper edges of the door inner panel 5. The door inner panel 5 has a sealing surface which is in parallel with the door outer panel 2 and is opposing the vehicle body 12. The lock side panel 52 has a sealing surface 526 which continues from the flange wall 524 provided on the vertical wall 522. The weather strip 27 is in contact with these sealing surfaces for sealing between the vehicle door 1 and vehicle body 12. The weather strip 27 is secured to the vertical wall 522 of the lock side panel 52 at the door inner panel 5 side, and is secured to the flange portion 31 of the door trim 3 at the portion where the door lock device 11 is accommodated.

According to the present invention, since the through holes of the open element or the connecting element are covered by the hood element, the water or other external substances may be prevented from entering into the inside of the vehicle compartment side of the door inner panel even such substances may enter into the door inner space through the through holes due to the provision of the hood element to cover the holes. Thus by this structure the door lock device can be protected from the rain or water to improve the reliability of the door lock function.

According to the vehicle door system of the above structure of the invention, since the door look device is disposed on the inner side of the compartment side of the door inner panel, the vehicle theft prevention function will be improved.

According to a further development, the open element of the door lock device has a reverse U-shaped open lever at the convex portion of which the through hole is inserted, one end of which is extended into the door inner space along the hood element and connected to the connecting element and the other end of which is extended along the inner surface of the vehicle compartment side of the door inner panel, a main lever rotatably connected to the other end of the open lever for actuating the door lock device and a sub lever one end of which is rotatably connected between the convex portion and the other end of the open lever and the other end of which is rotatably connected to a base plate of the door lock device, whereby the linear movement of the connecting element upon opening operation of the door outside handle may be converted into the rotational movement and such rotational movement is transmitted to the door lock device. This simple construction may prevent the water from entering into the vehicle compartment side of the door inner space where the door lock device is located.

According to a further aspect of the present invention, a water proof material may be preferably provided on the outer peripheral portion of the through hole to more strengthen the water proof function.

According to another preferred aspect of the invention, the hood element may be constructed by a lock reinforce to reinforce the portion of the door inner panel corresponding to the attachment portion of the door lock device. This will reduce the number of components and lead to the reduction of cost.

It is intended that the foregoing detailed description be regarded as illustrative rather than limiting and that it is understood that the following claims define the scope of the invention.

## Claims

1. A vehicle door system having a door lock device (11) and door outside handle (16) comprising:
a door inner panel (5);
a door outer panel (2) operatively connected to the door inner panel (5) to form a door inner space (A) therebetween;
the door lock device (11) secured to the inner side of the vehicle compartment side of the door inner panel (5) and being operated to open and close the door of the vehicle, the door lock device (11) having an open element (113);
the door outside handle (16) attached to the door outer panel (2) and operatively connected to the open element (113) of the door lock device (11) through a connecting element (14);
a first through hole (5b) formed in the door inner panel (5) and into which the open element (113) or the connecting element (14) is inserted; and
a hood element (22) provided in the door inner space (A) for covering the through hole (5b)
**characterized in that**
said hood element (22) has a second through hole (22a) formed at a position lower than the first through hole (5b), and further covers a projecting portion of the open element (113) or the connecting element (14), which projects outside of the vehicle compartment from the first through hole (5b) and extends into the second through hole (22a).

2. A vehicle door system having a door lock device and a door outside handle according to claim 1, wherein the open element includes:
an open lever (113) having a U-shape profile and at the convex portion thereof being inserted into the first through hole (5b), one end portion thereof being extending along the hood element (22) to the outer surface of the vehicle compartment side of the door inner panel (5), a main lever (113a) rotatably connected to the other end of the open lever (113) for actuation of the door lock device (11), and a sub lever (113b) one end of which is rotatably connected to a portion between the convex portion and the other end of the open lever (113) and the other end of which is rotatably connected to a base plate (111) of the door lock device (11) and wherein the linear movement of the connecting element (14) with respect to the opening operation of the door outside handle (16) is converted into the rotational movement to transmit to the door lock device (11).

3. A vehicle door system having a door lock device (11) and a door outside handle (16) according to claim 1 or claim 2, wherein the first through hole (5b) is provided with a water proof element (33) at the entire periphery thereof.

4. A vehicle door system having a door lock device and a door outside handle according to one of claims 1, 2 and 3, wherein the hood element (22) is used for reinforcing function to strengthen the portion of the door inner panel (5) where the door lock device (11) is attached.

## Patentansprüche

1. Fahrzeugtürsystem mit einer Türverrieglungsvorrichtung (11) und einem Türaußengriff (16), umfassend:
ein Türinnenblech (5);
ein Türaußenblech (2), das unter Bildung eines Turinnenraums (A) dazwischen mit dem Türinnenblech (5) wirkverbunden ist;
die Türverrieglungsvorrichtung (11), die an der Innenseite der Fahrzeugraumseite des Türinnenbleches (5) befestigt ist und betatigt wird, um die Tür des Fahrzeugs zu öffnen und zu schließen, wobei die Türverriegelungsvorrichtung (11) ein Öffnungselement (113) hat;
den Türaußengriff (16), der an dem Türaußenblech (2) angebracht ist und mit dem Öffnungselement (113) der Türverriegelungsvorrichtung (11) über ein Verbindungselement (14) wirkverbunden ist;
ein erstes Durchgangsloch (5b), das in dem Türinnenblech (5) ausgebildet ist und in das das Öffnungselement (113) oder das Verbindungselement (14) eingeführt ist; und
ein im Türinnenraum (A) vorgesehenes Haubenelement (22) zum Abdecken des Durchgangsloches (5b),
**dadurch gekennzeichnet, dass**
das Haubenelement (22) ein zweites Durchgangsloch (22a) hat, das an einer niedrigeren Stelle als das erste Durchgangsloch (5b) ausgebildet ist, und außerdem einen vorstehenden Abschnitt des Öffnungselementes (113) oder des Verbindungselements (14) abdeckt, der außerhalb des Fahrzeugraumes vom ersten Durchgangsloch (5b) vorsteht und sich in das zweite Durchgangsloch (22a) erstreckt.

2. Fahrzeugtürsystem mit einer Türverrieglungsvorrichtung und einem Türaußengriff nach Anspruch 1, bei dem das Öffnungselement Folgendes umfasst:
einen Öffnungshebel (113), der ein U-förmiges Profil hat und an seinem konvexen Abschnitt in das erste Durchgangsloch (5b) eingeführt ist, wobei sein einer Endabschnitt entlang dem Haubenelement (22) zur Außenfläche der Fahrzeugraumseite des Türinnenbleches (5) verläuft, einen mit dem anderen Ende des Öffnungshebels (113) drehbar verbundenen Haupthebel (113a) zur Betätigung der Türverriegelungsvorrichtung (11) und einen Nebenhebel (113b), dessen eines Ende drehbar mit einem Abschnitt zwischen dem konvexen Abschnitt und dem anderen Ende des Öffnungshebels (113) verbunden ist und dessen anderes Ende drehbar mit einem Grundblech (111) der Türverriegelungsvorrichtung (11) verbunden ist, und wobei die Linearbewegung des Verbindungselementes (14) bezogen auf den Öffnungsvorgang des Türaußengriffes (16) in eine Drehbewegung umgewandelt wird, die auf die Türverriegelungsvorrichtung (11) übertragen wird.

3. Fahrzeugtürsystem mit einer Türverriegelungsvorrichtung (11) und einem Türaußengriff (16) gemäß Anspruch 1 oder Anspruch 2, bei dem das erste Durchgangsloch (5b) an seinem gesamten Umfang mit einem wasserdichten Element (33) versehen ist.

4. Fahrzeugtursystem mit einer Türverriegelungsvorrichtung und einem Türaußengriff nach einem der Anspruche 1, 2 und 3, bei dem das Haubenelement (22) zur Versteifung verwendet wird, um den Abschnitt des Turinnenbleches (5) zu stärken, wo die Türverriegelungsvorrichtung (11) angebracht ist.

## Revendications

1. Système de portière de véhicule comportant un dispositif de serrure de portière (11) et une poignée extérieure de portière (16) comprenant :
un panneau intérieur de portière (5),
un panneau extérieur de portière (2) raccordé de façon fonctionnelle au panneau intérieur de portière (5) pour former un espace intérieur de portière (A) entre ceux-ci,
le dispositif de serrure de portière (11) étant fixé au côté intérieur du côté du compartiment du véhicule du panneau intérieur de portière (5) et étant mis en oeuvre pour ouvrir et fermer la portière du véhicule, le dispositif de serrure de portière (11) comportant un élément d'ouverture (113),
la poignée extérieure de portière (16) étant fixée au panneau extérieur de portière (2) et reliée de façon fonctionnelle à l'élément d'ouverture (113) du dispositif de serrure de portière (11) par l'intermédiaire d'un élément de raccordement (14),
un premier trou traversant (5b) formé dans le panneau intérieur de portière (5) et dans lequel l'élément d'ouverture (113) ou l'élément de raccordement (14) est inséré, et
un élément de recouvrement (22) disposé dans l'espace intérieur de portière (A), destiné à recouvrir le trou traversant (5b),
**caractérisé en ce que**
ledit élément de recouvrement (22) comporte un second trou traversant (22a) formé à une position plus basse que le premier trou traversant (5b), et recouvre en outre une partie en saillie de l'élément d'ouverture (113) ou de l'élément de raccordement (14), lequel dépasse à l'extérieur du compartiment du véhicule depuis le premier trou traversant (5b) et s'étend dans le second trou traversant (22a).

2. Système de portière de véhicule comportant un dispositif de serrure de portière et une poignée extérieure de portière selon la revendication 1, dans lequel l'élément d'ouverture comprend :
un levier d'ouverture (113) présentant un profil en forme de U et au moins une partie convexe de celui-ci étant insérée dans le premier trou traversant (5b), une partie d'extrémité de celui-ci s'étendant le long de l'élément de recouvrement (22) jusqu'à la surface extérieure du côté du compartiment du véhicule et du panneau intérieur de portière (5), un levier principal (113a) étant relié avec possibilité de rotation à l'autre extrémité du levier d'ouverture (113) pour actionner le dispositif de serrure de portière (11), et un levier secondaire (113b) dont une première extrémité est reliée avec possibilité de rotation à une partie entre la partie convexe et l'autre extrémité du levier d'ouverture (113) et dont l'autre extrémité est reliée avec possibilité de rotation à une plaque de base (111) du dispositif de serrure de portière (11) et où le déplacement linéaire de l'élément de raccordement (14) relatif à l'opération d'ouverture de la poignée extérieure de portière (16) est converti en un mouvement de rotation devant être transmis au dispositif de serrure de portière (11).

3. Système de portière de véhicule comportant un dispositif de serrure de portière (11) et une poignée extérieure de portière (16) selon la revendication 1 ou la revendication 2, dans lequel le premier trou traversant (5b) est muni d'un élément d'étanchéité (33) sur toute sa périphérie.

4. Système de portière de véhicule comportant un dispositif de serrure de portière et une poignée extérieure de portière selon les revendications 1, 2 et 3, dans lequel l'élément de recouvrement (22) est utilisé en vue d'une fonction de renfort pour renforcer la partie du panneau intérieur de portière (5) où le dispositif de serrure de portière (11) est fixé.
